# EUROPEAN PATENT APPLICATION

(11) **EP 4 647 169 A1**
(43) Date of publication of application: **12.11.2025**
(21) Application number: 23915030.3
(22) Date of filing: 29.12.2023
(51) Int. Cl.: B01L 9/00, G01N 35/00, G01N 21/84

(54) **CRADLE ASSEMBLY AND IN VITRO DIAGNOSTIC DEVICE ASSEMBLY COMPRISING SAME**

(30) Priority: 03.01.2023 KR 20230000860; 28.04.2023 KR 20230056122
(71) Applicant: SD Biosensor, Inc., Gyeonggi-do 16690 (KR)
(72) Inventor: CHO, Young Shik, Suwon-si Gyeonggi-do 16690 (KR); PARK, Hyo Lim, Suwon-si, Gyeonggi-do 16690 (KR); KO, Hyun Geun, Suwon-si, Gyeonggi-do 16690 (KR); KIM, Dong Hun, Suwon-si, Gyeonggi-do 16690 (KR); WOO, Hyun Soo, Suwon-si, Gyeonggi-do 16690 (KR); KIM, Iek Lok, Suwon-si, Gyeonggi-do 16690 (KR)
(74) Representative: Eisenführ Speiser
(86) International application number: PCT/KR2023/021986
(87) International publication number: WO 2024/147571

(57) **Abstract**

According to an embodiment of the present invention, a cradle assembly comprises: a first cradle which is supported on the bottom surface, and to the front side of which an in vitro diagnostic device attaches; and a second cradle which couples to the first cradle so as to cover a part of the top surface thereof, and to the front side of which an in vitro diagnostic device attaches, the second cradle coupling selectively to the front end or back end of the top surface thereof.

## Description

### [Technical Field]

The present invention relates to a cradle assembly and an in vitro diagnostic device assembly including the same, and more specifically, to a cradle assembly which is coupled to and supports in vitro diagnostic devices with different sizes in various methods and an in vitro diagnostic device assembly including the same.

### [Background Art]

Recently, simple test reagents or diagnostic reagents and diagnostic devices have been variously developed to test pathogen infection due to virus, bacteria, and the like, pregnancy, cancer, and harmful substances such as residual agricultural pesticides in specific raw materials such as food and the like.

Particularly, an in vitro diagnostic technology is a technology for quickly diagnosing a disease at the outside of a human body using materials derived from the human body, such as blood, excreta, secretion, saliva, and the like, plays an important role in determining a clinical decision, and becomes an essential and specialized factor for patient treatment.

An in vitro diagnostic device is a medical device used to test using a clinical specimen taken from a human body, such as, tissue cells, blood, urine, etc., for the purpose of diagnosis and prognosis of diseases, determination of health conditions, determination of the effectiveness of treating diseases, prevention of diseases, etc., and since the test using the in vitro diagnostic device is performed at the outside of the human body, the burden of the test on the human body is smaller than that of a test using a medical device which needs to be inserted into the human body.

Such in vitro diagnostic devices may be formed to have various sizes according to test types, and the in vitro diagnostic devices may be connected in a method of stacking or the like and used to perform the test at once. When the in vitro diagnostic devices are stacked and used as described above, since structures and sizes for fastening them are different, there is a need to develop a cradle structure capable of stably supporting the in vitro diagnostic devices.

### [Detailed Description of Invention]

### [Technical Problem]

One embodiment of the present invention is directed to providing a cradle assembly which is coupled to rear surfaces of in vitro diagnostic devices to correspond to a stacking shape so as to stably support the in vitro diagnostic devices even when the in vitro diagnostic devices having different sizes are stacked, and an in vitro diagnostic device assembly including the same.

Objects to be achieved by the present invention are not limited to the above-described objects, and other objects which are not described above will be clearly understood by those skilled in the art through the following descriptions.

### [Technical Solution]

A cradle assembly according to one embodiment of the present invention includes a first cradle which is supported by a floor surface and of which a front surface is coupled to an in vitro diagnostic device and a second cradle which is coupled to the first cradle to cover a portion of an upper surface of the first cradle and selectively coupled to the first cradle to correspond to a front end or rear end of the upper surface of the first cradle and of which a front surface is coupled to the in vitro diagnostic device.

An upper surface or lower surface of the second cradle may be selectively coupled to the upper surface of the first cradle, and a length of the second cradle may be relatively smaller than that of the first cradle in a front-rear direction.

A plurality of guide ribs which guide the second cradle to be selectively coupled may be provided on the upper surface of the first cradle.

The guide ribs may include a first guide rib, a second guide rib, and a third guide rib which are disposed on the upper surface of the first cradle to be spaced at predetermined intervals in a front-rear direction.

A first insertion rib selectively inserted into and coupled to the first guide rib or the third guide rib may be provided on a lower surface of the second cradle.

A first support member which supports a rear surface of the in vitro diagnostic device may be provided on a lower surface of the second cradle.

A second support member which is inserted into and coupled to the second guide rib and supports a rear surface of the in vitro diagnostic device may be provided on an upper surface of the second cradle.

A second insertion rib inserted into and coupled to the first guide rib may be provided on the upper surface of the second cradle.

In each of the first guide rib, the second guide rib, and the third guide rib, a pair of ribs may be disposed to be spaced a predetermined distance from each other, and each of a first guide slit, a second guide slit, and a third guide slit may be formed between the pair of ribs.

The first guide rib may be disposed on a central portion of the upper surface of the first cradle, and the second guide rib and the third guide rib may be disposed on a rear end portion of the upper surface of the first cradle.

A plurality of guide slits which guide the second cradle to be selectively coupled may be formed in the upper surface of the first cradle.

First fastening hooks may be provided on the upper surface of the first cradle, and second fastening hooks on which the first fastening hooks are hooked may be provided on an upper surface and a lower surface of the second cradle.

The first fastening hooks may be provided at both sides of the upper surface of the first cradle to face each other, and the second fastening hooks may be provided at both sides of each of the upper surface and the lower surface of the second cradle to face each other.

An in vitro diagnostic device assembly according to another embodiment of the present invention includes the cradle assembly and in vitro diagnostic devices coupled to a front surface of the cradle assembly and having different sizes in a front-rear direction.

A mounting bracket to be coupled to another in vitro diagnostic device may be coupled to an upper surface of the in vitro diagnostic device, and a plurality of fastening protrusions may be provided to protrude from the mounting bracket.

Fixing protrusions on which the fastening protrusions are hooked may be provided to protrude from a lower surface of the in vitro diagnostic device, and protrusion grooves into which the fixing protrusions are inserted may be formed to be recessed in the fastening protrusions.

### [Advantageous Effects]

According to one embodiment of the present invention, since an upper surface or lower surface of a second cradle having a relatively smaller size than a first cradle is selectively coupled to an upper surface of the first cradle, assembly can be performed in various combinations. Accordingly, even when in vitro diagnostic devices having different sizes are stacked, the first cradle and the second cradle are coupled to rear surfaces of the in vitro diagnostic devices to correspond to a stacking shape, thereby stably supporting the in vitro diagnostic devices.

### [Description of Drawings]

FIG. 1 is an exploded perspective view illustrating a cradle assembly according to one embodiment of the present invention.
FIG. 2 is a perspective view illustrating a first cradle of the cradle assembly according to one embodiment of the present invention.
FIG. 3 is a view illustrating an assembly portion of the cradle assembly according to one embodiment of the present invention.
FIG. 4 is a view illustrating one example in which the cradle assembly is assembled according to one embodiment of the present invention.
FIG. 5 is a view illustrating a coupling portion of the cradle assembly illustrated in FIG. 4.
FIG. 6 is a cross-sectional view illustrating the coupling portion of the cradle assembly illustrated in FIG. 4.
FIG. 7 is a view illustrating another example in which the cradle assembly is assembled according to one embodiment of the present invention.
FIG. 8 is a view illustrating a coupling portion of the cradle assembly illustrated in FIG. 7.
FIG. 9 is a cross-sectional view illustrating the coupling portion of the cradle assembly illustrated in FIG. 7.
FIG. 10 is a view illustrating still another example in which the cradle assembly is assembled according to one embodiment of the present invention.
FIG. 11 is a view illustrating a coupling portion of the cradle assembly illustrated in FIG. 10.
FIG. 12 is a cross-sectional view illustrating the coupling portion of the cradle assembly illustrated in FIG. 10.
FIG. 13 is a side view illustrating an in vitro diagnostic device assembly according to one embodiment of the present invention.
FIG. 14 is a side view illustrating an in vitro diagnostic device assembly according to another embodiment of the present invention.
FIG. 15 is a side view illustrating an in vitro diagnostic device assembly according to still another embodiment of the present invention.
FIG. 16 is a perspective view illustrating a mounting bracket of an in vitro diagnostic device.
FIG. 17 is a view illustrating a coupling portion of the in vitro diagnostic device.

### [Modes of the Invention]

Since the present invention may be variously modified and have several embodiments, specific embodiments will be illustrated in the accompanying drawings and described in detail. However, this is not intended to limit the present invention to the specific embodiments, and it should be appreciated that all changes, equivalents, and substitutes falling within the spirit and technical scope of the present invention are encompassed in the present invention. In the description of the embodiments, certain detailed descriptions of the related art will be omitted when it is deemed that they may unnecessarily obscure the gist of the present invention.

Terms such as "first" and "second" may be used to describe various components, but the components are not limited by the above terms. These terms are used only to distinguish one component from another.

Terms used herein are only for the purpose of describing particular embodiments and are not intended to limit the present invention. Singular forms are intended to include the plural forms, unless the context clearly indicates otherwise. In the present specification, it should be understood that the terms "comprise," "comprising," "include," and/or "including" specify the presence of stated features, numbers, steps, operations, elements, components, and/or combinations thereof but do not preclude the presence or addition of one or more other features, numbers, steps, operations, elements, components, and/or combinations thereof.

In addition, throughout the specification, when components are "connected," this may not only mean that two or more components are directly connected, but may also mean that two or more components are indirectly connected through other components or are physically connected and also electrically connected, or are one component even when referred to by different names according to positions or functions thereof.

In addition, when a first component is described as being formed or disposed "on (above) or under (below)" a second component, such a description includes both a case in which the two components are formed or disposed in direct contact with each other and a case in which one or more other components are interposed between the two components. In addition, when a first component is described as being formed "on (above) or under (below)" a second component, such a description may include a case in which the first component is formed at an upper side or a lower side with respect to the second component.

Hereinafter, embodiments of a cradle assembly and an in vitro diagnostic device assembly including the same will be described in detail with reference to the accompanying drawings, and when the embodiments are described with reference to the accompanying drawings, components that are the same or correspond to each other will be denoted by the same reference numerals, and redundant description thereof will be omitted.

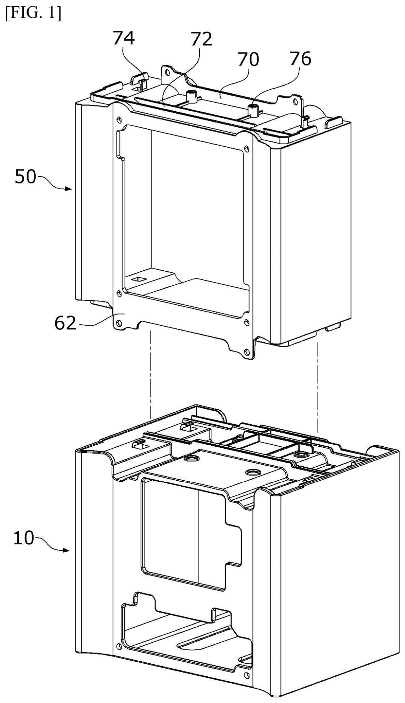

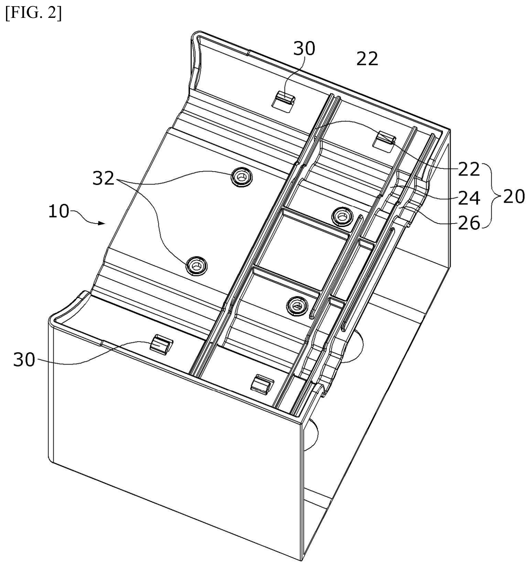

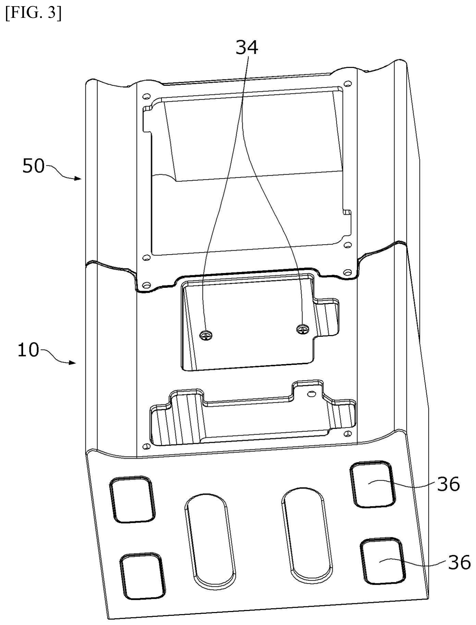

FIG. 1 is an exploded perspective view illustrating a cradle assembly according to one embodiment of the present invention, FIG. 2 is a perspective view illustrating a first cradle of the cradle assembly according to one embodiment of the present invention, and FIG. 3 is a view illustrating an assembly portion of the cradle assembly according to one embodiment of the present invention.

According to the illustrated drawings, the cradle assembly according to one embodiment of the present invention may include a first cradle 10 which is supported by a floor surface and of which a front surface is coupled to an in vitro diagnostic device, and a second cradle 50 which is coupled to the first cradle 10 to cover a portion of an upper surface of the first cradle 10 and selectively coupled to the first cradle 10 to correspond to a front end or rear end of the upper surface of the first cradle 10 and of which a front surface is coupled to an in vitro diagnostic device 100.

Each of the first cradle 10 and the second cradle 50 may have a rectangular parallelepiped shape and a hollow interior. In the present embodiment, the first cradle 10 forms a lower portion supported by the floor surface, and the second cradle 50 is coupled to the upper surface of the first cradle 10 to form an upper portion. The first cradle 10 and the second cradle 50 may be coupled in various combinations such that the in vitro diagnostic devices 100 disposed in various combinations are supported by the floor surface. That is, a lower surface of the second cradle 50 may be coupled to the upper surface of the first cradle 10, or the second cradle 50 may be rotated 180° through vertical reversal, and an upper surface of the second cradle 50 may be coupled thereto. In addition, in the present embodiment, a size of the second cradle 50 may be formed to be relatively smaller than that of the first cradle 10, and a length of the second cradle 50 in a front-rear direction may be formed to be relatively short.

A plurality of guide ribs 20 which guide the second cradle 50 to be selectively coupled to the first cradle 10 may be provided on the upper surface of the first cradle 10. The guide ribs 20 may include a first guide rib 22, a second guide rib 24, and a third guide rib 26 which are disposed on the upper surface of the first cradle 10 to be spaced at predetermined intervals in a front-rear direction of the first cradle 10.

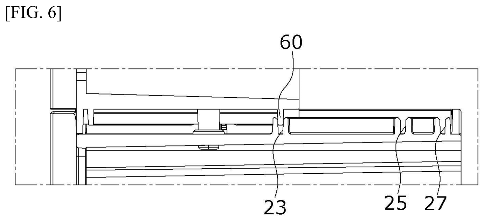

Referring to FIG. 6, in each of the first guide rib 22, the second guide rib 24, and the third guide rib 26, a pair of ribs may be disposed to be spaced a predetermined distance from each other, a first guide slit 23, a second guide slit 25, and a third guide slit 27 may be formed therebetween, and a first insertion rib 60, a second support member 70, and a second insertion rib 72 may be inserted into the guide slits 23, 25, and 27.

Referring to FIG. 2 again, the first guide rib 22 may be disposed on a central portion of the upper surface of the first cradle 10, and the second guide rib 24 and the third guide rib 26 may be disposed on a rear end portion of the upper surface of the first cradle 10. This is only one example proposed in the present embodiment, and the guide ribs 20 may be disposed at various locations in order for coupling of the second cradle 50.

In addition, although the guide slits 23, 25, and 27 have been described above as being formed between the pair of guide ribs 20, the guide slits 23, 25, and 27 may also be directly formed on the upper surface of the first cradle 10.

The guide ribs 20 extend long in a left-right width direction on the upper surface of the first cradle 10, and insertion ribs 60 and 72 are inserted into the guide ribs 20 so that the second cradle 50 coupled thereto is stably supported.

Meanwhile, first fastening hooks 30 are provided on the upper surface of the first cradle 10, and second fastening hooks 64 on which the first fastening hooks 30 are hooked are provided on the upper surface and the lower surface of the second cradle 50. In this case, the reason why the second fastening hooks 64 are provided on the upper surface and the lower surface of the second cradle 50 is that the upper surface or the lower surface of the second cradle 50 may be vertically reversed and selectively coupled to the upper surface of the first cradle 10.

The first fastening hooks 30 may be provided at both sides of the upper surface of the first cradle 10 to face each other, and the second fastening hooks 64 may be provided at both sides of each of the upper surface and the lower surface of the second cradle 50 to face each other. In addition, the first fastening hooks 30 may be provided as a plurality of first fastening hooks 30 disposed on the upper surface of the first cradle 10 at both side to be spaced a predetermined distance from each other in the front-rear direction, and the first fastening hooks 64 may be provided as a plurality of first fastening hooks 64 disposed at both sides of each of the upper surface and the lower surface of the second cradle 50 to be spaced a predetermined distance in the front-rear direction. The locations of the first fastening hooks 30 and the second fastening hooks 64 described above are only one example, and the first fastening hooks 30 and the second fastening hooks 64 may be disposed at various locations.

Fastening holes 32 to be coupled with fastening bosses 66 provided on the upper surface and the lower surface of the second cradle 50 are formed in the upper surface of the first cradle 10. In a state in which the first cradle 10 and the second cradle 50 are temporarily coupled through the guide ribs 20, a user may fasten screws 34 to the fastening bosses 66 through the fastening holes 32 to finally complete the coupling. A plurality of support pads 36 formed of a rubber material or the like may be provided on a lower surface of the first cradle 10.

The first insertion rib 60 which is selectively inserted into and coupled to the first guide rib 22 or the third guide rib 26 may be provided on the lower surface of the second cradle 50. The first insertion rib 60 may be a rib provided on the lower surface of the second cradle 50 to extend in the left-right width direction and may be selectively inserted into the first guide slit 23 or the third guide slit 27.

In addition, a first support member 62 for supporting a rear surface of the in vitro diagnostic device 100 may be provided on the lower surface of the second cradle 50. The first support member 62 may be provided on the lower surface of the second cradle 50 to extend in the left-right width direction.

Meanwhile, the second support member 70 for supporting the rear surface of the in vitro diagnostic device 100 may be provided on the upper surface of the second cradle 50. In addition, the second insertion rib 72 inserted into the first guide slit 23 of the first guide rib 22 may be provided on the upper surface of the second cradle 50. The second support member 70 and the second insertion rib 72 may be provided on the upper surface of the second cradle 50 to extend in the left-right width direction.

In the present embodiment, when the second support member 70 is not coupled to the first cradle 50, the second support member 70 may support the rear surface of the in vitro diagnostic device 100, and when the second support member 70 is coupled to the second cradle 50, the second support member 70 may be inserted into the third guide slit 27. This is only one example, and, like the second support member 70, the first support member 62 may also perform a function of coupling the cradles.

In addition, third fastening hooks 74 and the fastening bosses 76 may be provided on the upper surface of the second cradle 50 like the lower surface thereof. The third fastening hooks 74 and the fastening bosses 76 may be fastened to the first fastening hooks 30 and the fastening holes 32 of the first cradle 10.

Hereinafter, various examples in which the cradle assembly according to one embodiment of the present invention is assembled will be described. In the present embodiment, three assembly examples will be described, and the present invention is not limited thereto. Various assembly examples may be proposed according to the size and type of the in vitro diagnostic device 100.

### First assembly example

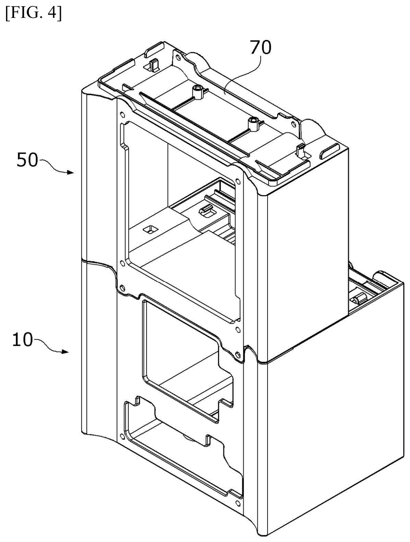

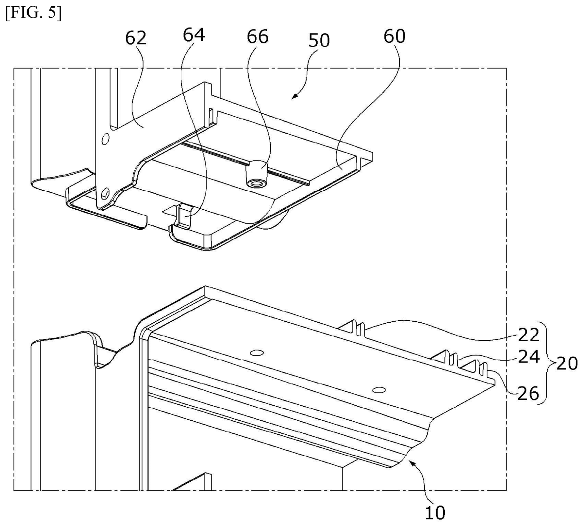

FIG. 4 is a view illustrating one example in which the cradle assembly is assembled according to one embodiment of the present invention, FIG. 5 is a view illustrating a coupling portion of the cradle assembly illustrated in FIG. 4, and FIG. 6 is a cross-sectional view illustrating the coupling portion of the cradle assembly illustrated in FIG. 4.

Referring to the drawings, as the lower surface of the second cradle 50 is coupled to the upper surface of the first cradle 10, both the second cradle 50 and the first cradle 10 may be assembled. In this case, the first insertion rib 60 is inserted into and coupled to the first guide slit 23 of the first guide rib 22, and the front surface of the second cradle 50 is disposed to match the front surface of the first cradle 10.

In this state, since the front surface of the first cradle 10 and the front surface of the second cradle 50 matches each other, rear surfaces of two in vitro diagnostic devices 100 stacked on each other may be simultaneously supported, and the second support member 70 provided on the upper surface of the second cradle 50 may support a rear surface of an in vitro diagnostic device 100 stacked in a third layer.

### Second assembly example

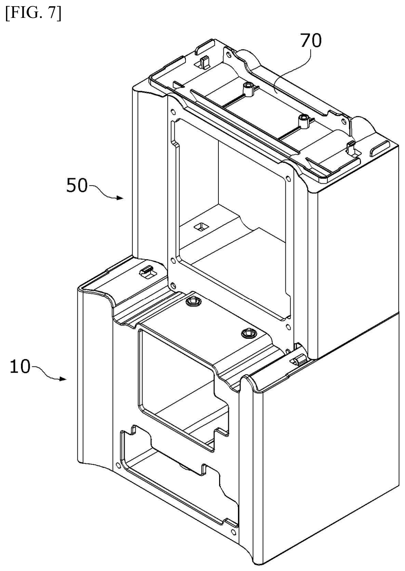

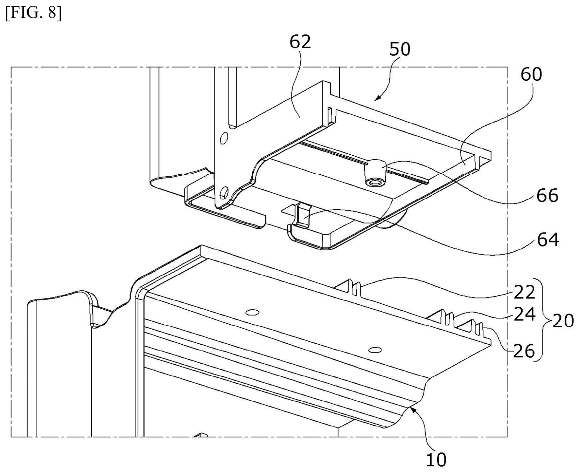

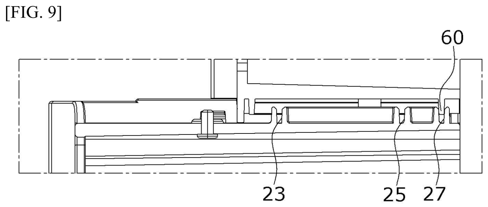

FIG. 7 is a view illustrating another example in which the cradle assembly is assembled according to one embodiment of the present invention, FIG. 8 is a view illustrating a coupling portion of the cradle assembly illustrated in FIG. 7, and FIG. 9 is a cross-sectional view illustrating the coupling portion of the cradle assembly illustrated in FIG. 7.

Referring to the drawings, as the lower surface of the second cradle 50 is coupled to the upper surface of the first cradle 10, both the second cradle 50 and the first cradle 10 may be coupled to each other. In this case, the second cradle 50 may be moved rearward further than the previous example and then coupled thereto. The first insertion rib 60 is inserted into and coupled to the third guide rib 26 of the third guide slit 27, the front surface of the second cradle 50 is located behind the front surface of the first cradle 10, and a rear surface of the second cradle 50 is disposed to match a rear surface of the first cradle 10.

In this state, since the second cradle 50 is disposed at a rear side, when an in vitro diagnostic device 100 stacked in a second layer has a portion protruding rearward, a rear surface of the in vitro diagnostic device 100 may be stably supported. In addition, the second support member 70 provided on the upper surface of the second cradle 50 may support a rear surface of an in vitro diagnostic device 100 stacked in a third layer.

### Third assembly example

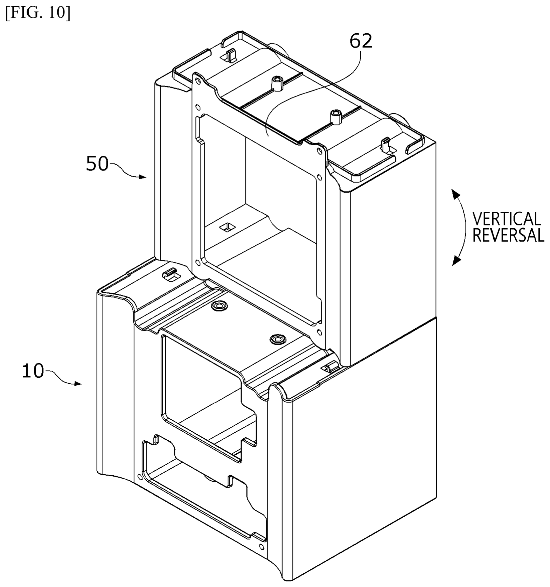

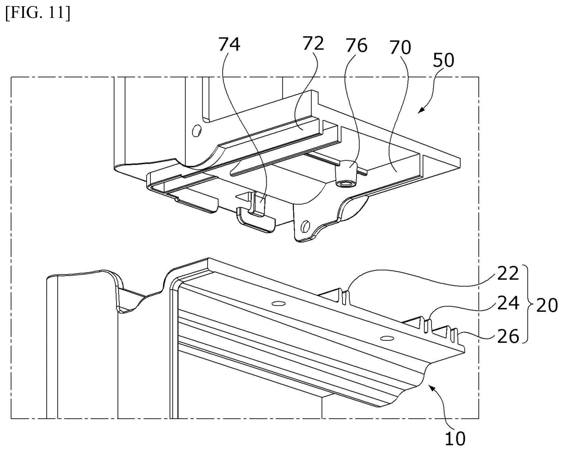

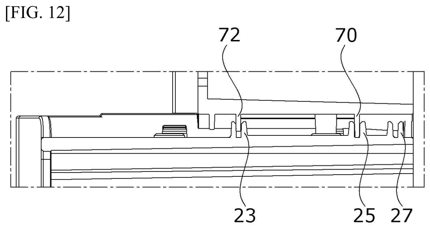

FIG. 10 is a view illustrating still another example in which the cradle assembly is assembled according to one embodiment of the present invention, FIG. 11 is a view illustrating a coupling portion of the cradle assembly illustrated in FIG. 10, and FIG. 12 is a cross-sectional view illustrating the coupling portion of the cradle assembly illustrated in FIG. 10.

Referring to the drawings, in the present assembly example, the second cradle 50 may be vertically reversed, and the upper surface of the second cradle 50 may be coupled to the upper surface of the first cradle 10. In this case, the second support member 70 is inserted into the second guide slit 25 of the second guide rib 24, and the third insertion rib 72 is inserted into and coupled to the second guide slit 23 of the first guide rib 22. The front surface of the second cradle 50 is located behind the front surface of the first cradle 10, and the rear surface of the second cradle 50 is disposed to match the rear surface of the first cradle 10.

In this state, since the second cradle 50 is disposed at a rear side, when an in vitro diagnostic device 100 stacked in a second layer has a portion protruding rearward, a rear surface of the in vitro diagnostic device 100 may be stably supported. In addition, the first support member 62 provided on the lower surface of the second cradle 50 may support a rear surface of an in vitro diagnostic device 100 stacked in a third layer. In this case, since the first support member 62 is disposed at a location corresponding to the front surface of the second cradle 50, the first support member 62 may stably support the rear surface of the in vitro diagnostic device 100 which is stacked in the third layer and is small.

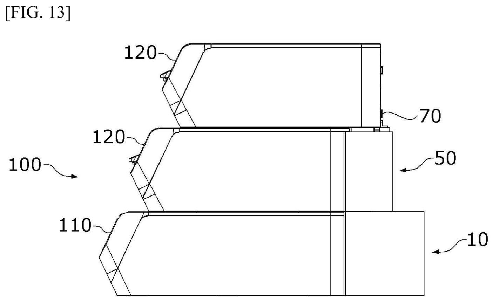

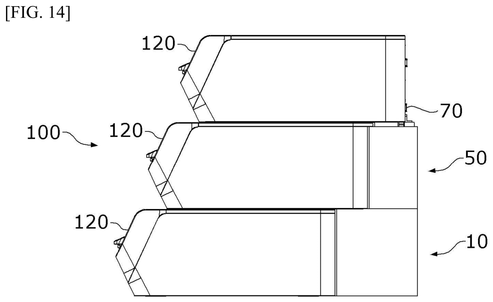

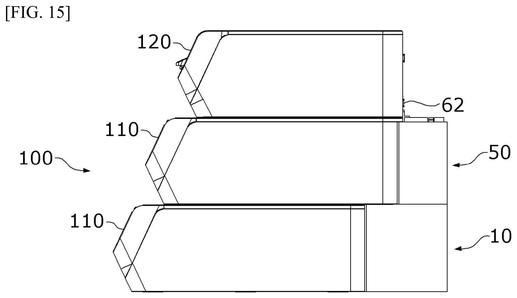

FIG. 13 is a side view illustrating an in vitro diagnostic device assembly according to one embodiment of the present invention, FIG. 14 is a side view illustrating an in vitro diagnostic device assembly according to another embodiment of the present invention, and FIG. 15 is a side view illustrating an in vitro diagnostic device assembly according to still another embodiment of the present invention. FIG. 13 is the view illustrating the cradle assembly illustrated in FIG. 5, FIG. 14 is the view illustrating the cradle assembly illustrated in FIG. 8, and FIG. 15 is the view illustrating the cradle assembly illustrated in FIG. 11.

In vitro diagnostic devices 100 may be coupled to a front surface of the cradle assembly and may have different sizes in a front-rear direction. A first in vitro diagnostic device 110 and second in vitro diagnostic devices 120 having different sizes in the front-rear direction are illustrated in the drawing.

Referring to FIG. 13, two second in vitro diagnostic devices 120 may be stacked on an upper surface of the first in vitro diagnostic device 110. In this case, in vitro diagnostic devices 100 are stacked upward such that front surfaces are moved rearward. Accordingly, a rear surface of the second in vitro diagnostic device 120 stacked in a third layer may protrude rearward. Then, there is a worry that the in vitro diagnostic device 100 may fall rearward due to a weight of the second in vitro diagnostic device 120.

In this case, when the cradle assembly assembled according to the present embodiment supports the in vitro diagnostic devices 100, rear surfaces of the in vitro diagnostic devices 100 which are the first in vitro diagnostic device 110 and the second in vitro diagnostic device 120 which are stacked in a first layer and a second layer may be supported together, and a rear surface of the second in vitro diagnostic device 120 stacked in the third layer may be supported by the second support member 70.

Referring to FIG. 14, second in vitro diagnostic devices 120 having the same size may be stacked in three layers. In this case, rear surfaces of the second in vitro diagnostic devices 120 stacked in a second layer and a third layer may protrude rearward. Then vitro diagnostic devices 100 may fall rearward due to weights of the second in vitro diagnostic devices 120.

In this case, when the cradle assembly assembled according to the present embodiment supports the in vitro diagnostic devices 100, the rear surfaces of the second in vitro diagnostic devices 120 stacked in the second layer and the third layer may be stably supported. In addition, although the second in vitro diagnostic devices 120 stacked in three layers are illustrated in the present drawings, even when first in vitro diagnostic devices 110 are stacked in three layers, the cradle assembly may be assembled as described above to support rear surfaces of the first in vitro diagnostic devices 110.

Referring to FIG. 15, first in vitro diagnostic devices 110 may be stacked in a first layer and a second layer, and a second in vitro diagnostic device 120 may be stacked in a third layer. In this case, rear surfaces of the first in vitro diagnostic device 110 and the second in vitro diagnostic device 120 stacked in the second and the third layer may protrude rearward. Then, there is a worry that in vitro diagnostic devices 100 may fall rearward due to weights of the first in vitro diagnostic device 110 and the second in vitro diagnostic device 120.

In this case, when the cradle assembly assembled according to present embodiment supports the in vitro diagnostic devices 100, the rear surfaces of the first in vitro diagnostic device 110 and the second in vitro diagnostic device 120 stacked in the second layer and the third layer may be stably supported. The first support member 62 may support the rear surface of the second in vitro diagnostic device 120 stacked in the third layer.

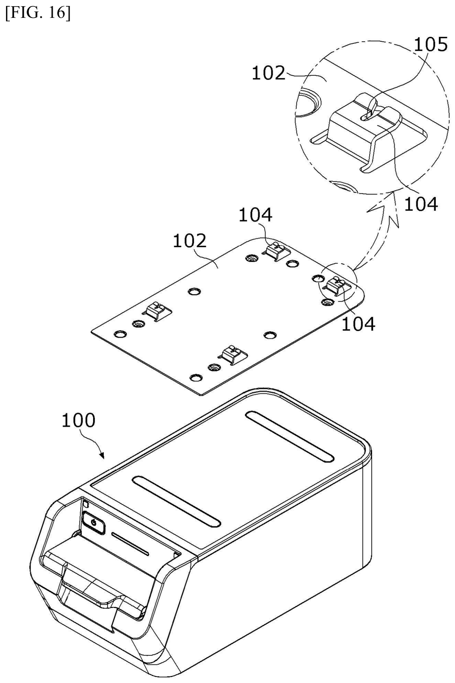

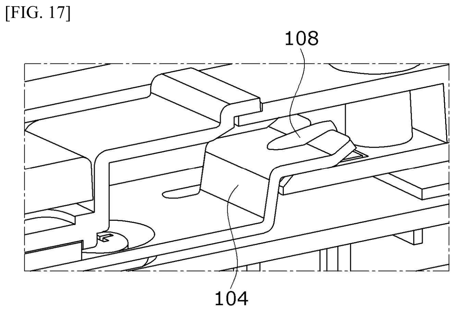

FIG. 16 is a perspective view illustrating a mounting bracket of an in vitro diagnostic device, and FIG. 17 is a view illustrating a coupling portion of the in vitro diagnostic device.

Referring to the drawings, a mounting bracket 102 for coupling the in vitro diagnostic device 100 to another in vitro diagnostic device 100 may be coupled to an upper surface of an in vitro diagnostic device 100, and a plurality of fastening protrusions 104 may be provided to protrude from the mounting bracket 102. The mounting bracket 102 may have a plate shape and may be seated on a portion recessed in the upper surface of the in vitro diagnostic device 100.

A fixing protrusion 108 on which one of the fastening protrusions 104 is hooked may be provided to protrude from a lower surface of the in vitro diagnostic device 100, and a protrusion groove 105 into which the fixing protrusion 108 is inserted may be provided to be recessed in the fastening protrusion 104. Accordingly, in a state in which the in vitro diagnostic devices 100 are temporarily assembled, when the in vitro diagnostic device 100 is slid forward, the fixing protrusion 108 may be inserted into and stably coupled to the protrusion groove 105.

While the present invention has been described above with reference to exemplary embodiments, it may be understood by those skilled in the art that various modifications and changes of the present invention may be made within a range not departing from the spirit and scope of the present invention defined by the appended claims. In addition, it should be interpreted that differences related to modifications and changes fall within the scope of the present invention defined by the appended claims.

### [Reference Numerals]

| | | | |
|---|---|---|---|
| 10: | FIRST CRADLE | 20: | GUIDE RIB |
| 22: | FIRST GUIDE RIB | 23: | FIRST GUIDE SLIT |
| 24: | SECOND GUIDE RIB | 25: | SECOND GUIDE SLIT |
| 26: | THIRD GUIDE RIB | 27: | THIRD GUIDE SLIT |
| 30: | FIRST FASTENING HOOK | 32: | FASTENING HOLE |
| 34: | SCREW | 36: | SUPPORT PAD |
| 50: | SECOND CRADLE | 60: | FIRST INSERTION RIB |
| 62: | FIRST SUPPORT MEMBER | 64: | SECOND FASTENING HOOK |
| 66: | FASTENING BOSS | 70: | SECOND SUPPORT MEMBER |
| 72: | SECOND INSERTION RIB | 74: | THIRD FASTENING HOOK |
| 76: | FASTENING BOSS | 100: | DEVICE IN VITRO DIAGNOSTIC |
| 102: | MOUNTING BRACKET | 104: | FASTENING PROTRUSION |
| 105: | PROTRUSION GROOVE | 108: | FIXING PROTRUSION |
| 110: | FIRST IN VITRO DIAGNOSTIC DEVICE | 120: | DIAGNOSTIC DEVICE SECOND IN VITRO |

## Claims

1. A cradle assembly for an in vitro diagnostic device, comprising:
a first cradle which is supported by a floor surface and of which a front surface is coupled to an in vitro diagnostic device; and
a second cradle which is coupled to the first cradle to cover a portion of an upper surface of the first cradle and selectively coupled to the first cradle to correspond to a front end or rear end of the upper surface of the first cradle and of which a front surface is coupled to the in vitro diagnostic device.

2. The cradle assembly of claim 1, wherein:
an upper surface or lower surface of the second cradle is selectively coupled to the upper surface of the first cradle; and
a length of the second cradle is relatively smaller than that of the first cradle in a front-rear direction.

3. The cradle assembly of claim 1, wherein a plurality of guide ribs which guide the second cradle to be selectively coupled are provided on the upper surface of the first cradle.

4. The cradle assembly of claim 3, wherein the guide ribs include a first guide rib, a second guide rib, and a third guide rib which are disposed on the upper surface of the first cradle to be spaced at predetermined intervals in a front-rear direction.

5. The cradle assembly of claim 4, wherein a first insertion rib selectively inserted into and coupled to the first guide rib or the third guide rib is provided on a lower surface of the second cradle.

6. The cradle assembly of claim 4, wherein a first support member which supports a rear surface of the in vitro diagnostic device is provided on a lower surface of the second cradle.

7. The cradle assembly of claim 4, wherein a second support member which is inserted into and coupled to the second guide rib and supports a rear surface of the in vitro diagnostic device is provided on an upper surface of the second cradle.

8. The cradle assembly of claim 7, wherein a second insertion rib inserted into and coupled to the first guide rib is provided on the upper surface of the second cradle.

9. The cradle assembly of claim 4, wherein:
in each of the first guide rib, the second guide rib, and the third guide rib, a pair of ribs are disposed to be spaced a predetermined distance from each other; and
each of a first guide slit, a second guide slit, and a third guide slit are formed between the pair of ribs.

10. The cradle assembly of claim 4, wherein:
the first guide rib is disposed on a central portion of the upper surface of the first cradle; and
the second guide rib and the third guide rib are disposed on a rear end portion of the upper surface of the first cradle.

11. The cradle assembly of claim 1, wherein a plurality of guide slits which guide the second cradle to be selectively coupled is formed in the upper surface of the first cradle.

12. The cradle assembly of claim 11, wherein:
first fastening hooks are provided on the upper surface of the first cradle; and
second fastening hooks on which the first fastening hooks are hooked are provided on an upper surface and a lower surface of the second cradle.

13. The cradle assembly of claim 12, wherein:
the first fastening hooks are provided at both sides of the upper surface of the first cradle to face each other; and
the second fastening hooks are provided at both sides of each of the upper surface and the lower surface of the second cradle to face each other.

14. An in vitro diagnostic device assembly comprising:
the cradle assembly of any one of claims 1 to 10; and
in vitro diagnostic devices coupled to a front surface of the cradle assembly and having different sizes in a front-rear direction.

15. The in vitro diagnostic device assembly of claim 14, wherein:
a mounting bracket to be coupled to another in vitro diagnostic device is coupled to an upper surface of the in vitro diagnostic device; and
a plurality of fastening protrusions are provided to protrude from the mounting bracket.

16. The in vitro diagnostic device assembly of claim 15, wherein:
fixing protrusions on which the fastening protrusions are hooked are provided to protrude from a lower surface of the in vitro diagnostic device; and
protrusion grooves into which the fixing protrusions are inserted are formed to be recessed in the fastening protrusions.
